# EUROPEAN PATENT APPLICATION

(11) **EP 4 258 071 A1**
(43) Date of publication of application: **11.10.2023**
(21) Application number: 21900356.3
(22) Date of filing: 04.11.2021
(51) Int. Cl.: G05B 23/02, G05B 19/418, G06Q 50/04, G06Q 50/10, G06Q 10/06

(54) **EQUIPMENT MANAGEMENT DEVICE AND EQUIPMENT MANAGEMENT METHOD**

(30) Priority: 03.12.2020 JP 2020201142
(71) Applicant: Hitachi Industrial Equipment Systems Co., Ltd., Tokyo 101-0021 (JP)
(72) Inventor: OJIMA Masayoshi, Tokyo 101-0021 (JP); YAMAZAKI Masahiro, Tokyo 101-0021 (JP); SATO Kenji, Tokyo 101-0021 (JP); KOBAYASHI Yutaka, Tokyo 101-0021 (JP); GOTOU Hideyuki, Tokyo 101-0021 (JP)
(74) Representative: MERH-IP Matias Erny Reichl Hoffmann Patentanwälte PartG mbB
(86) International application number: PCT/JP2021/040681
(87) International publication number: WO 2022/118601

(57) **Abstract**

The purpose of the present invention is to provide an equipment management device and an equipment management method that make it possible to create a maintenance plan at a lower cost. In order to achieve this objective, the present invention provides an equipment management device that assists with planning for the operation and maintenance of equipment, wherein the equipment management device comprises: an abnormality detection unit that detects abnormality in equipment on the basis of information obtained by measuring the state of the equipment; a maintenance management unit that manages maintenance of the equipment using the abnormality detection result as input, calculates maintenance costs, and plans a maintenance plan; an operation management unit that manages operation of the equipment using the abnormality detection result as input and plans an operation plan; an energy consumption change estimation unit that estimates change in the energy consumption of the equipment from the abnormality detection result; an energy management unit that manages the energy consumption of the equipment using the estimated change in energy consumption as input and calculates energy costs; and a costs comparison unit that compares the costs information calculated by the energy management unit and by the maintenance management unit. The equipment management device is configured so as to revise the maintenance plan from the maintenance management unit and the operation plan from the operation management unit on the basis of the result from the costs comparison unit.

## Description

### TECHNICAL FIELD

The present invention relates to an equipment management system for managing equipments such as manufacturing equipments, and to a method for modifying operation and maintenance plans for equipments based on the results of abnormality detection.

### BACKGROUND ART

In the management of production line equipment in manufacturing plants, it is necessary not only to properly maintain the equipment in order to continue production, but also to properly manage the equipment from the perspective of energy conservation. For this reason, technologies have been proposed to support maintenance planning by taking into account past trends of increased energy consumption and trends of suppression of increased energy consumption due to maintenance work, as shown in Patent Document 1.

### CITATION LIST

### PATENT DOCUMENT

Patent Document 1: JP 2017-182245 A

### SUMMARY OF THE INVENTION

### PROBLEMS TO BE SOLVED BY THE INVENTION

In the Patent Document 1, in order to formulate a maintenance plan based on the increasing trend of past energy consumption, in the event of a sudden failure that occurs infrequently or in the event of an unprecedented combination of multiple deterioration modes, there was a problem that it was difficult to reflect it in the maintenance plan because it was not possible to refer to statistically sufficient past cases and estimate the impact.

The purpose of the present invention is to provide an equipment management device and an equipment management method that can accurately calculate the impact on energy consumption even in the event of a sudden failure that occurs infrequently and that enables creation of a maintenance plan at a lower cost.

### SOLUTIONS TO PROBLEMS

According to an example of the present invention, an equipment management device that assists with planning for the operation and maintenance of equipment, wherein the equipment management device comprises: an abnormality detection unit that detects abnormality in equipment on the basis of information obtained by measuring the state of the equipment; a maintenance management unit that manages maintenance of the equipment using the abnormality detection result as input, calculates maintenance costs, and plans a maintenance plan; an operation management unit that manages operation of the equipment using the abnormality detection result as input and plans an operation plan; an energy consumption change estimation unit that estimates change in the energy consumption of the equipment from the abnormality detection result; an energy management unit that manages the energy consumption of the equipment using the estimated change in energy consumption as input and calculates energy costs; and a costs comparison unit that compares the costs information calculated by the energy management unit and by the maintenance management unit. The equipment management device is configured so as to revise the maintenance plan from the maintenance management unit and the operation plan from the operation management unit on the basis of the result from the costs comparison unit.

### EFFECTS OF THE INVENTION

According to the present invention, it is possible to provide equipment management device and equipment management method that enable creation of maintenance plan at a lower cost.

### BRIEF DESCRIPTION OF THE DRAWINGS

Figure 1 is a functional configuration diagram of an equipment management system in Example 1.
Figure 2 is a hardware image of the equipment management system in Example 1.
Figure 3 is a functional diagram of a maintenance management unit in Example 1.
Figure 4 is a functional diagram of an operation management unit in Example 1.
Figure 5 is an explanatory diagram of the relationship between abnormality level detection results and changes in energy consumption in Example 1.
Figure 6 is a functional diagram of an energy management unit in Example 1.
Figure 7 is an explanatory diagram of the relationship between maintenance costs and increased energy consumption costs in Example 1.
Figure 8 is a functional diagram of an equipment management device in Example 2.
Figure 9 is an explanatory diagram of utilization rate suppression taking into account the upper limit of energy consumption in Example 2.
Figure 10 is a functional diagram of an equipment management device in Example 3.
Figure 11 is an explanatory diagram of the estimation of energy consumption change in Example 3.
Figure 12 is a functional diagram of an energy consumption change model creation device in Example 4.
Figure 13 is a functional diagram of a state measurement unit and an abnormality detection unit in Example 5.

### MODE FOR CARRYING OUT THE INVENTION

Hereinafter, Examples of the present invention will be described by using the drawings.

### Example 1

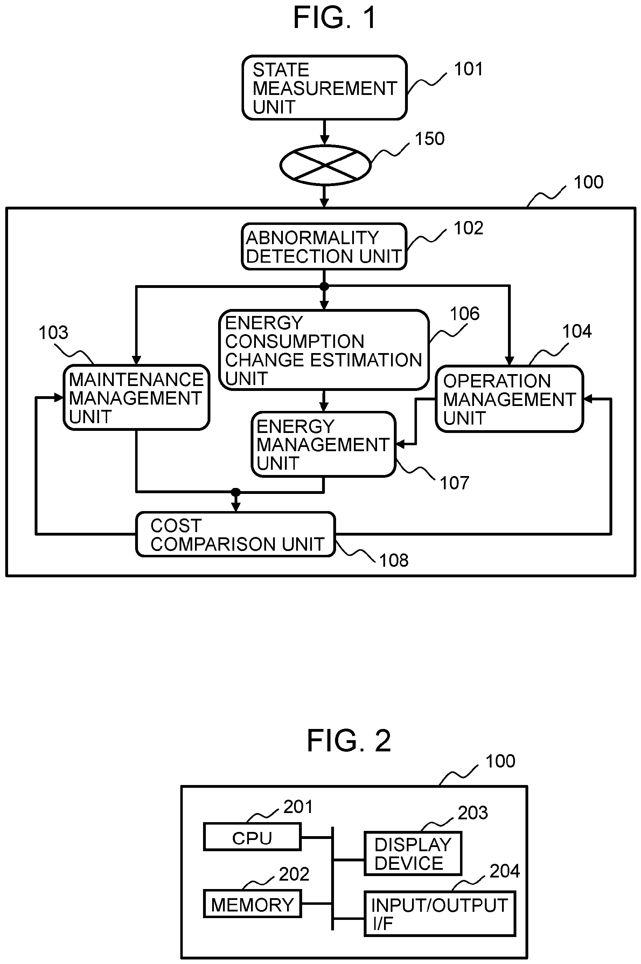

Figure 1 is a functional configuration diagram of an equipment management system that manages equipment such as manufacturing equipments in this Example. In Figure 1, the equipment management system consists of a state measurement unit 101, a network 150, and an equipment management device 100.

The state measurement unit 101 is connected to, for example, industrial equipment such as an air conditioning fan in a factory and a motor that is manufacturing equipment, and measures a state of the industrial equipment using various sensors such as a current sensor, a vibration sensor, and a noise meter, or measures the state from the signals in the control equipment of the industrial equipment.

The equipment management device 100 receives the results measured by the state measurement unit 101 via the network 150.

The equipment management device 100 has an abnormality detection unit 102, a maintenance management unit 103, an operation management unit 104, an energy consumption change estimation unit 106, an energy management unit 107, and a cost comparison unit 108.

The hardware image of the equipment management device 100 is shown in Figure 2. In Figure 2, the equipment management device 100 is implemented by a general information processing apparatus having a processing device (CPU) 201, a storage device (memory) 202, a display device 203, and an input/output interface (I/F) 204. That is, each process of the abnormality detection unit 102, the maintenance management unit 103, the operation management unit 104, the energy consumption change estimation unit 106, the energy management unit 107, and the cost comparison unit 108 is executed by software processing by CPU 201 based on programs and data for processing them stored in memory 202. In addition, the equipment management device 100 is connected to the network 150 via an input/output I/F, and obtains the results measured by the state measurement unit 101. The display device 203 also displays the drafted maintenance plans and operation plans that will be described later.

In Figure 1, the abnormality detection unit 102 uses the results measured by the state measurement unit 101 to detect signs of failure or behavior that is different from normal for industrial equipment. Normally, when an abnormality that is a sign of failure is detected, the detected information is sent to the maintenance management unit 103 and the operation management unit 104 .

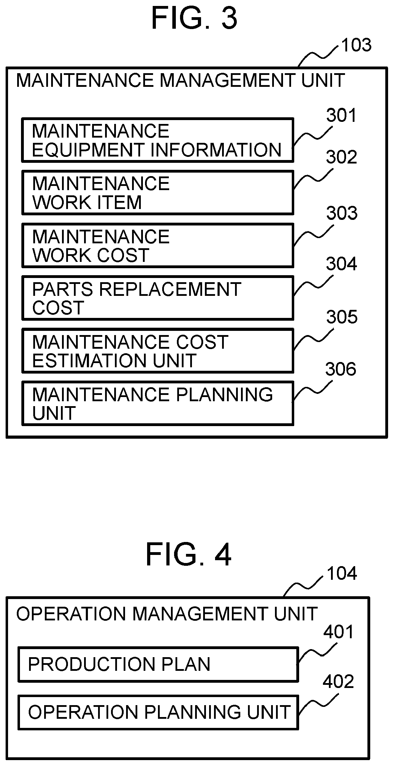

Figure 3 is a functional diagram of the maintenance management unit 103 in this Example. In Figure 3, in the maintenance management unit 103, a maintenance planning unit 306 formulates a maintenance plan based on information in the database of maintenance equipment information 301 and maintenance work item 302, and a maintenance cost estimation unit 305 estimates maintenance costs from the maintenance plan and information such as maintenance work cost 303 and parts replacement cost 304.

Figure 4 is a functional diagram of the operation management unit 104 in this Example. In Figure 4, in the operation management unit 104, the operation planning unit 402 draws up an operation plan such as when to operate the equipment in order to correspond to the production plan 401 such as how many pieces are required by when.

When the result of the abnormality detection is sent to the maintenance management unit 103 and the operation management unit 104, the operation is stopped or the maintenance work is corrected in order to prevent failure.

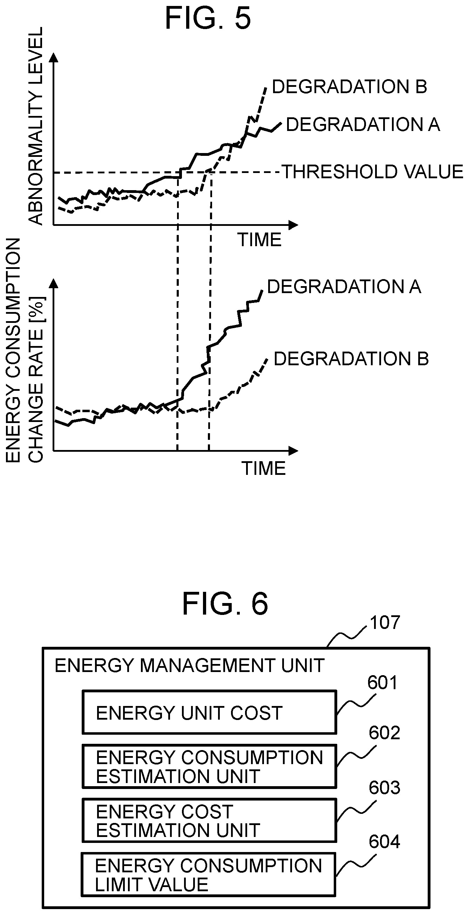

Here, if the industrial equipment whose status is being measured is a device with large energy consumption, such as a fan, pump, or heater, their energy consumption may increase more than usual after an abnormality is detected. Figure 5 shows an example of abnormality level detection results and changes in energy consumption. In Figure 5, an abnormality level analysis is performed in the abnormality detection unit 102 for two types of degradation of an industrial device: degradation A (solid line) and degradation B (dashed line). The anomality level analysis is to detect deviation from the normal state in the state monitoring result as an abnormality level, and the abnormality is detected when the abnormality level exceeds a certain threshold value. In the upper row of Figure 5, the deterioration A is detected earlier than the deterioration B, and finally the abnormality level of the deterioration B exceeds that of the deterioration A. At this point, it is possible to calculate how the energy consumption changes compared to the normal state by utilizing part of the analytical model used for the abnormality level analysis. An example is shown in the lower row of Figure 5. In the abnormal detection timing transition in the upper row, the energy consumption change rate corresponding to the respective deterioration increases, indicating that the energy consumption tends to increase due to the deterioration of the equipment. However, the increasing trend of abnormality level and the increasing trend of energy consumption do not necessarily coincide. If operation were to continue until the normal maintenance work period with energy consumption increasing more than normal in this manner, more energy costs than normal would be required.

The energy consumption change estimation unit 106 estimates such energy consumption change trends. The energy consumption change estimation unit 106 sends the estimated energy consumption change trend to the energy management unit 107.

Figure 6 is a functional diagram of the energy management unit 107 in this Example. In Figure 6, the energy management unit 107 has an energy unit cost information 601 and has an energy consumption estimation unit 602 that estimates energy consumption based on the operation plan sent from the operation management unit 104. And it has an energy cost estimation unit 603 that estimates the energy consumption cost from these information. When information on the trend of increased energy consumption after abnormality detection is sent to the energy management unit 107, the cost increase corresponding to the increased energy consumption can be estimated. Note that the energy consumption limit value 604 will be described later.

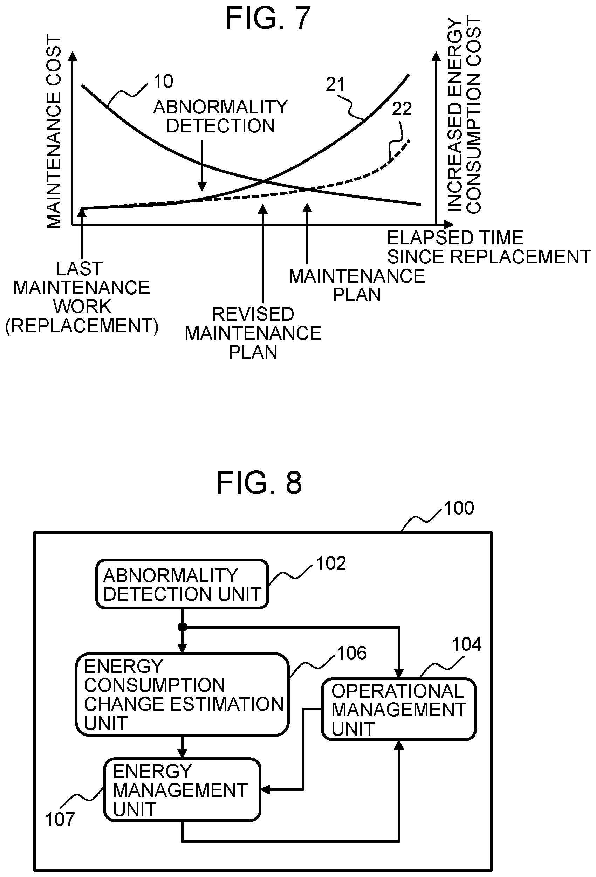

Figure 7 is an explanatory diagram of the relationship between maintenance costs and increased energy consumption costs in this Example. In Figure 7, the horizontal axis indicates the elapsed time since the last maintenance work such as replacement of parts, and the vertical axis indicates the maintenance cost and the increased energy consumption cost. The downward-sloping graph 10 indicates the maintenance cost, and upward-sloping graphs 21 and 22 indicate the increased energy consumption cost. In addition, in the upward-sloping graph, the solid line graph 21 indicates the increased cost of energy consumption when an abnormality is detected, and the broken line graph 22 indicates the increased cost of energy consumption when no abnormality is detected.

As shown in Figure 7, as the elapsed time from the previous maintenance work increases, the impact of increased energy consumption cost is expected to increase as shown in Graphs 21 and 22. On the other hand, as maintenance work becomes slower, the maintenance cost decreases as shown in graph 10 because the number of maintenance operations over the entire life cycle decreases. Therefore, it is possible to derive the optimal maintenance timing by balancing these factors. For example, when no abnormality is detected, the optimal maintenance planning timing is the intersection of graph 10 and graph 22, whereas when an abnormality is detected and energy consumption increases, the optimal maintenance planning timing after the correction becomes the intersection of graph 10 and graph 21, and the optimum timing is shortened, and the overall cost can be suppressed by modifying the maintenance plan ahead of schedule.

Such cost comparisons are performed by the cost comparison unit 108. However, as a result of anomaly detection, energy consumption may decrease, and in that case, the maintenance plan may be postponed and revised as long as the failure does not occur. Following the output of the cost comparison unit 108, the maintenance plan in the maintenance management unit 103 and the operation plan in the operation management unit 104 are reviewed.

As described above, according to this Example, the equipment management device that assists with planning for the operation and maintenance of equipment, wherein the equipment management device comprises: an abnormality detection unit that detects abnormality in equipment on the basis of information obtained by measuring the state of the equipment; a maintenance management unit that manages maintenance of the equipment using the abnormality detection result as input, calculates maintenance costs, and plans a maintenance plan; an operation management unit that manages operation of the equipment using the abnormality detection result as input and plans an operation plan; an energy consumption change estimation unit that estimates change in the energy consumption of the equipment from the abnormality detection result; an energy management unit that manages the energy consumption of the equipment using the estimated change in energy consumption as input and calculates energy costs; and a costs comparison unit that compares the costs information calculated by the energy management unit and by the maintenance management unit. The equipment management device is configured so as to revise the maintenance plan from the maintenance management unit and the operation plan from the operation management unit on the basis of the result from the costs comparison unit.

In addition, an equipment management method that assists with planning for the operation and maintenance of equipment, the equipment management method comprising:
detecting abnormality in equipment on the basis of information obtained by measuring the state of the equipment;
managing maintenance of the equipment using the abnormality detection result as input, calculating maintenance cost, and planning a maintenance plan;
managing operation of the equipment using the abnormality detection result as input and planning an operation plan;
estimating change in the energy consumption of the equipment from the abnormality detection result;
managing the energy consumption of the equipment using the estimated change in energy consumption as input and calculating energy cost;
comparing the maintenance cost and the energy cost; and
revising the maintenance plan and the operation plan based on the comparison result.

As described above, according to this Example, it is possible to accurately calculate the impact on energy consumption even in the event of sudden failures that occur infrequently, enabling the creation of maintenance plans and operation plans at lower costs.

### Example 2

Figure 8 is a functional diagram of an equipment management device in this Example. In Figure 8, configurations that have the same functions as those in Figure 1 are marked with the same symbols, and their descriptions are omitted. Figure 8 differs from Figure 1 in that there is no maintenance management unit 103 and cost comparison unit 108, and the operational management unit 104 is controlled by the output of the energy management unit 107. In other words, the energy management unit 107 may have an upper limit for energy consumption from the viewpoint of reducing energy consumption and suppressing power contract fees, as shown in the energy consumption limit 604 in Figure 6.

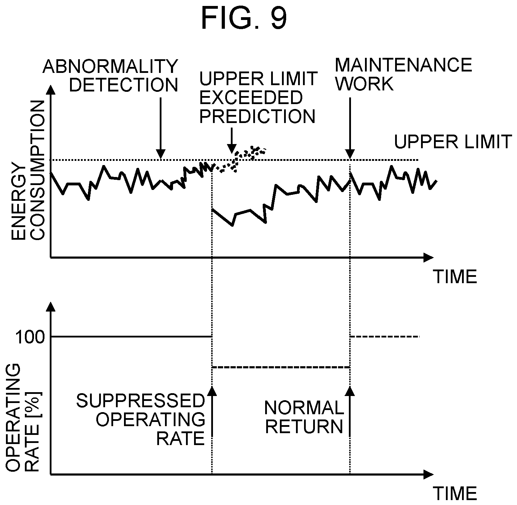

Figure 9 is an explanatory diagram of utilization rate suppression taking into account the upper limit of energy consumption in this Example. As shown in Figure 9, when an abnormality is detected at a certain time, it is estimated that energy consumption will increase due to the abnormality detection, and if the estimated energy consumption by the energy management unit 107 is estimated to exceed the upper limit of energy consumption, the information is sent to the operation management unit 104 and the operation plan is revised to suppress the operation rate of the equipment. As a result, the actual energy consumption will be reduced to correspond to the suppressed operating rate, and operation can be continued until the next maintenance work even if energy consumption increases due to degradation. After the maintenance work, the increase in energy consumption is eliminated and the operation rate can be returned to normal.

Although this Example features operational management that takes into account the energy consumption upper limit, maintenance management and operational management by maintenance management unit 103 and cost comparison unit 108 in Figure 1 may be used together.

As described above, according to this Example, the equipment management device that assists with planning for the operation and maintenance of equipment, wherein the equipment management device comprises: an abnormality detection unit that detects abnormality in equipment on the basis of information obtained by measuring the state of the equipment; an operation management unit that manages operation of the equipment using the abnormality detection result as input and plans an operation plan; an energy consumption change estimation unit that estimates change in the energy consumption of the equipment from the abnormality detection result; and an energy management unit that estimates whether the amount of energy consumed by the equipment exceeds the upper limit of energy consumption by using the estimated change in energy consumption as input. The operation management unit can be configured as an equipment management device that reviews the operation plan based on the results estimated by the energy management unit.

In addition, an equipment management method that assists with planning for the operation and maintenance of equipment, the equipment management method comprising:
detecting abnormality in equipment on the basis of information obtained by measuring the state of the equipment;
managing operation of the equipment using the abnormality detection result as input and planning an operation plan;
estimating change in the energy consumption of the equipment from the abnormality detection result;
determining whether the amount of energy consumption of the equipment exceeds the upper limit of energy consumption by inputting the estimated change in energy consumption; and
revising the operation plan based on the determined result.

### Example 3

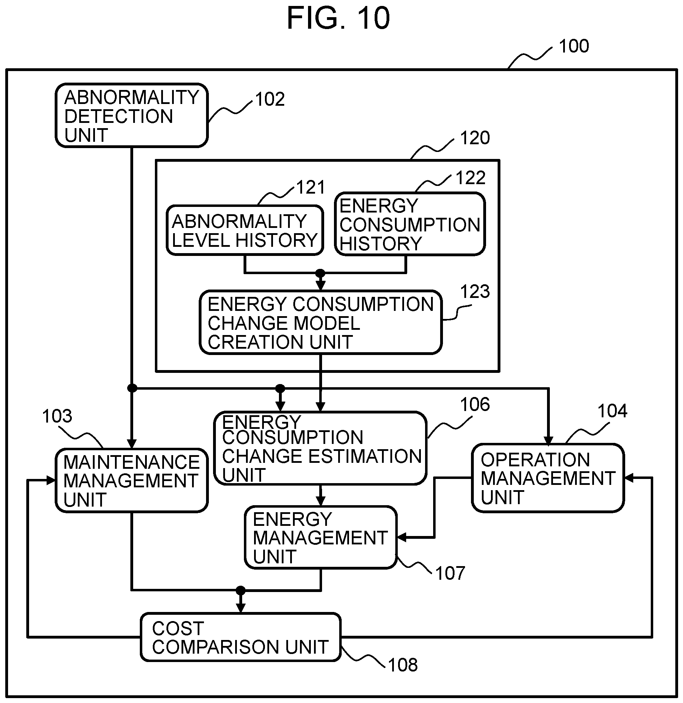

Figure 10 is a functional diagram of an equipment management device in this Example. In Figure 10, configurations that have the same functions as those in Figure 1 are marked with the same symbols, and their descriptions are omitted. The point in Figure 10 that differs from Figure 1 is that it has an energy consumption change model creation device 120, which consists of an abnormality level history 121, an energy consumption history 122, and an energy consumption change model creation unit 123.

In Figure 10, abnormality level history 121 stores the history of abnormality level detection results during past operations. The energy consumption history 122 stores the history of changes in energy consumption during past operations.

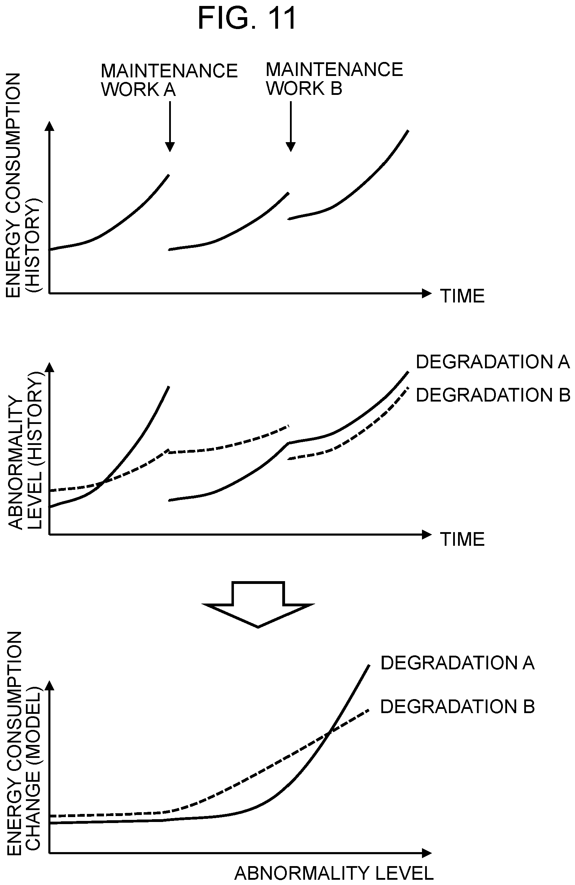

An example of the stored energy consumption and abnormality level history is shown in Figure 11. As shown in the upper row of Figure 11, the fact that the device deteriorates and the energy consumption increases with the passage of time is saved as a history. At this time, by performing maintenance work, the degradation of the equipment corresponding to the work is recovered and the energy consumption is decreasing. The middle row of Figure 11 shows the histories of two abnormality level detection results, Degradation A and Degradation B, when the energy consumption in the upper row was observed. It can be seen that the abnormality level of each degradation increases with the passage of time, and that the abnormality level decreases after the maintenance work corresponding to the degradation is performed. From these two histories, the energy consumption change model, which shows the relationship between the abnormality level of the equipment and the change in the energy consumption of the equipment and is the abnormality level dependence of the energy consumption change, is calculated using regression analysis or the like as shown in the lower row of Figure 11, in the energy consumption change model creation unit 123 shown in Figure 10. By calculating the energy consumption change model in this way, the relationship between equipment deterioration and changes in energy consumption can be evaluated even when changes in energy consumption cannot be obtained directly from abnormality detection. The energy consumption change model also makes it possible to accurately estimate changes in energy consumption based on the energy consumption change model and the results of abnormality detection, even for combinations of degrees of deterioration that have never occurred in the past. In addition, by sending the energy consumption change estimated in this way to the energy management unit 107, the energy consumption cost can be estimated, and the maintenance plan can be revised based on the comparison result of the cost comparison unit 108 between the maintenance cost estimated by the maintenance management unit 103 and the estimated energy consumption cost, the overall cost can be reduced.

### Example 4

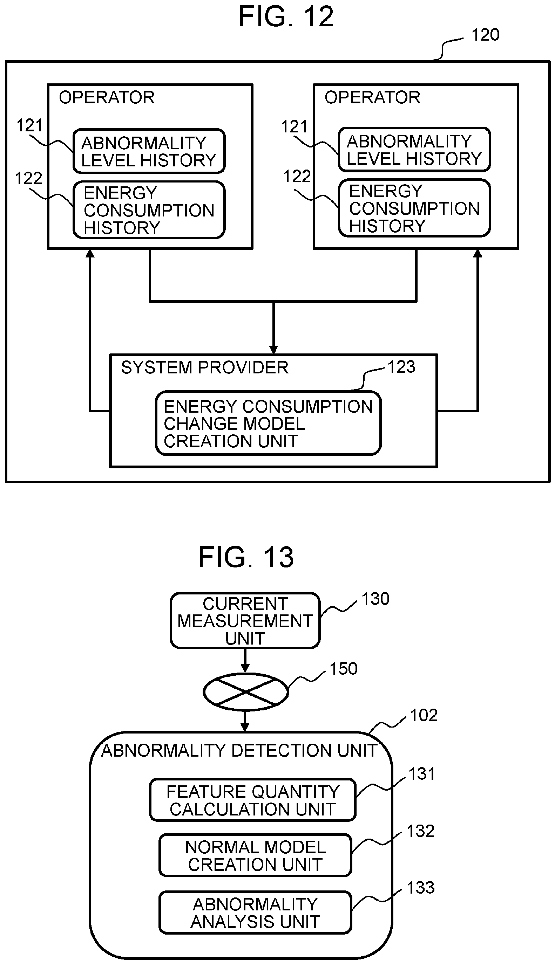

Figure 12 is a functional diagram of the energy consumption change model creation device 120 in this Example. In Figure 12, configurations that have the same functions as those in Figure 10 are marked with the same symbols, and their descriptions are omitted. Figure 12 is a modification of the energy consumption change model creation device 120 in Figure 10, and the equipment management device in this Example is the same as in Figure 10 except for the energy consumption change model creation device 120. Figure 12 differs from the energy consumption change model creation device 120 in Figure 10 in that it has a plurality of abnormality level history 121 and energy consumption history 122.

When calculating an energy consumption change model from an abnormality level history 121 and energy consumption history 122, these histories need to be statistically sufficient. In particular, with regard to abnormality level history, in the case of degradation related to failures that occur infrequently, a single operator's information may not be sufficient to obtain sufficient history. In this case, the provider of the equipment management system asks a plurality of operators who operate similar systems to provide the abnormality level history 121 and the energy consumption history 122, and the provider of the equipment management system creates the energy consumption change model in the energy consumption change model creation unit 123, so that the energy consumption change model can be created with high accuracy even when an individual operator cannot obtain a sufficient history.

A system or business model can be constructed in which the energy consumption change model creation device 120 is operated as a single device, and the created energy consumption change model is sent to and provided to the equipment management system operator. As a result, the equipment management system can use a highly accurate energy consumption change model and accurately estimate changes in energy consumption. By correcting the maintenance plan based on the result of comparison between the maintenance cost and the energy consumption cost, it becomes possible to further reduce the overall cost.

Thus, according to this Example, an energy consumption change model creation device for use in an equipment management device that supports planning of operation and maintenance of equipment, wherein the energy consumption change model is a model that shows the relationship between the abnormality level of the equipment and the change in energy consumption of the equipment, and wherein the energy consumption change model creation device acquires the detection history of abnormality of the equipment and the change history of energy consumption of the equipment from multiple equipment operators, creates the energy consumption change model from those histories, and sends the created energy consumption change model to the equipment operator.

### Example 5

Figure 13 is a functional diagram of a state measurement unit and an abnormality detection unit in this Example. In Figure 13, a current measurement unit 130 for measuring current is used as a state measurement unit, and the abnormality detection unit 102 detects an abnormality in industrial equipment having a rotating machine such as an electric motor. The abnormality detection unit 102 consists of a feature quantity calculation unit 131, a normal model creation unit 132, and an abnormality analysis unit 133.

The feature quantity calculation unit 131 calculates any one of the fundamental frequency intensity or current effective value of the current calculated from the results of current measurements, or the average value of the DC current calculated from the AC current, as a feature quantity. The normal model creation unit 132 generates a model of the feature quantity when the equipment is normal. The abnormality analysis unit 133 compares the measured feature quantity with the model of the feature quantity in the normal case generated by the normal model creation unit 132, performs abnormality analysis, and outputs the abnormality level.

In this way, by using the feature quantity, it becomes possible to estimate changes in energy consumption at the same time as abnormality detection, and it is possible to estimate changes in energy consumption with high accuracy while suppressing measurement costs.

While the example has been described hereinbefore, the present invention is not limited to the described example and various modifications are included therein. For example, the foregoing example has been described in detail to explain the present invention clearly and the present invention is not necessarily limited to its example including all components described. It is also possible to replace a part of the configuration of one example with the configuration of another example, and it is also possible to add the configuration of another example to the configuration of one example. It will also be possible to add, delete, or replace some of the configurations of each example with other configurations.

### REFERENCE SIGNS LIST

- 100:: Equipment management device
- 101:: State measurement unit
- 102:: Abnormality detection unit
- 103:: Maintenance management unit
- 104:: Operation management unit
- 106:: Energy consumption change estimation unit
- 107:: Energy management unit
- 108:: Cost comparison unit
- 120:: Energy consumption change model creation device
- 121:: Abnormality level history
- 122:: Energy consumption history
- 123:: Energy consumption change model creation unit
- 130:: Current measurement unit
- 131:: Feature quantity calculation unit,
- 132:: Normal model creation unit
- 133:: Abnormality analysis unit
- 150:: Network

## Claims

1. An equipment management device that assists with planning for the operation and maintenance of equipment, wherein the equipment management device comprises:
an abnormality detection unit that detects abnormality in equipment on the basis of information obtained by measuring the state of the equipment;
a maintenance management unit that manages maintenance of the equipment using the abnormality detection result as input, calculates maintenance costs, and plans a maintenance plan;
an operation management unit that manages operation of the equipment using the abnormality detection result as input and plans an operation plan;
an energy consumption change estimation unit that estimates change in the energy consumption of the equipment from the abnormality detection result;
an energy management unit that manages the energy consumption of the equipment using the estimated change in energy consumption as input and calculates energy costs; and
a costs comparison unit that compares the costs information calculated by the energy management unit and by the maintenance management unit,
wherein the maintenance plan from the maintenance management unit and the operation plan from the operation management unit are revised on the basis of the result from the costs comparison unit.

2. An equipment management device that assists with planning for the operation and maintenance of equipment, wherein the equipment management device comprises:
an abnormality detection unit that detects abnormality in equipment on the basis of information obtained by measuring the state of the equipment;
an operation management unit that manages operation of the equipment using the abnormality detection result as input and plans an operation plan;
an energy consumption change estimation unit that estimates change in the energy consumption of the equipment from the abnormality detection result; and
an energy management unit that estimates whether the amount of energy consumed by the equipment exceeds the upper limit of energy consumption by using the estimated change in energy consumption as input,
wherein the operation management unit reviews the operation plan based on the results estimated by the energy management unit.

3. The equipment management device according to claim 1, further comprising:
an energy consumption change model creation unit that creates an energy consumption change model that models the impact of the abnormality detection result on the energy consumption from the anomality detection history and the energy consumption history,
wherein the energy consumption change estimation unit estimates a change in energy consumption of the equipment from the abnormality detection result and the energy consumption change model.

4. The equipment management device according to claim 3,
wherein th energy consumption change model creation unit acquires the abnormality detection history and the energy consumption history from a plurality of equipment operators, and creates the energy consumption change model from these histories.

5. The equipment management device according to any one of claims 1 to 4,
wherein the information obtained by measuring the state of the equipment is information measured using a current sensor, and
the abnormality detection unit comprising a feature quantity calculation unit that calculates at least one of the current intensity of the fundamental frequency, the current effective value, and the DC current average value as a feature amount, a normal model creation unit that generates a feature quantity model when the equipment is normal, and an abnormality analysis unit that compares the calculated feature quantity with the model of the feature quantity in the normal case and outputs an abnormality level.

6. An equipment management method that assists with planning for the operation and maintenance of equipment, the equipment management method comprising:
detecting abnormality in equipment on the basis of information obtained by measuring the state of the equipment;
managing maintenance of the equipment using the abnormality detection result as input, calculating maintenance cost, and planning a maintenance plan;
managing operation of the equipment using the abnormality detection result as input and planning an operation plan;
estimating change in the energy consumption of the equipment from the abnormality detection result;
managing the energy consumption of the equipment using the estimated change in energy consumption as input and calculating energy cost;
comparing the maintenance cost and the energy cost; and
revising the maintenance plan and the operation plan based on the comparison result.

7. The equipment management method according to claim 6, further comprising:
creating an energy consumption change model that models the impact of the abnormality detection result on the energy consumption from the anomality detection history and the energy consumption history, and
estimating a change in energy consumption of the equipment from the abnormality detection result and the energy consumption change model.

8. The equipment management method according to claim 7,
wherein the abnormality detection history and the energy consumption history are acquired from a plurality of equipment operators, and
the energy consumption change model is created from these histories.

9. The equipment management method according to any one of claims 6 to 8,
wherein the information obtained by measuring the state of the equipment is information measured using a current sensor, and
in detecting the abnormality, at least one of the current intensity of the fundamental frequency, the current effective value, and the DC current average value is calculated as a feature value, a feature quantity model is generated when the equipment is normal, the calculated feature quantity and the model of the feature quantity in the normal case are compared, and an abnormality level is outputed.
